# EUROPEAN PATENT APPLICATION

(11) **EP 2 194 708 A2**
(43) Date of publication of application: **09.06.2010**
(21) Application number: 09172277.7
(22) Date of filing: 06.10.2009
(51) Int. Cl.: H04N 5/445

(54) **Display apparatus and control method thereof**

(30) Priority: 02.12.2008 KR 20080121304
(71) Applicant: SAMSUNG ELECTRONICS CO., LTD., Suwon-si Gyeonggi-do 442-742 (KR)
(72) Inventor: Park, Yoo-jin, Gyeonggi-do (KR)
(74) Representative: Robinson, Ian Michael

(57) **Abstract**

A control method and display apparatus are provided. The control method includes displaying a content, and if a preset input is performed, displaying a user interface menu associated with the corresponding setup options of the displayed content.

## Description

### BACKGROUND OF THE INVENTION

### 1. Field of the Invention

Methods and apparatuses consistent with the present invention relate to displaying contents, and more particularly, to a display method and apparatus which changes setup options provided to the contents.

### 2. Description of the Related Art

A display apparatus processes contents provided in various configurations from an external source or sources, and displays the contents as images on a display panel, such as for example a liquid crystal display (LCD) panel or a plasma display panel.

The display apparatus may be implemented in various forms including a television (TV) or a monitor. The contents provided to the display apparatus may have various forms and specifications. Further, even in case where the contents are of the same form, options provided to each content may be different.

For example, where a content provided to the display apparatus is a moving image, a multi audio option, corresponding to a plurality of languages, may be provided along with the moving image. Another content may be a moving image provided with no multi audio option.

When a plurality of contents are displayed on the display apparatus, it may be difficult for a user to ascertain, for example, whether the content being currently displayed is provided with a multi audio option.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to an aspect of the present invention, there is provided a control method of a display apparatus, the method including displaying a content; and if a preset input is performed, displaying a user interface menu associated with setup options corresponding to the displayed content.

The method may include, if the setup option is changed through the user interface menu, displaying the content in correspondence with the changed option.

The displaying of the user interface menu may include, if the preset input is performed, determining whether setup options corresponding to the displayed content are provided; and if it is determined that setup options are provided, displaying the user interface menu associated with the provided options.

The displaying of the user interface menu may include, if it is determined that setup options are not provided, displaying an error message.

The displaying of the content may include receiving the content and the setup option information from the outside, and the displaying of the user interface menu may include generating a user interface menu based on the received setup option information if the preset input is performed.

The receiving of the content and the setup option information may include receiving a broadcasting stream from the outside; and extracting the content and the setup option information from the received broadcasting stream.

The displaying of the content may include receiving the content and the setup option information from the outside, and overlaying the received setup option information over the content for a preset period of time.

The overlaying of the received setup option information may include, if the preset input is performed while the setup option information is being overlaid over the content, displaying the user interface menu based on received setup option information.

According to another aspect of the present invention, there is provided a display apparatus including a display unit; a content processing unit processing a content so as to display the content on the display unit; and a control unit displaying a user interface menu associated with setup options corresponding to the content processed by the content processing unit if a preset input is performed.

If the setup option is changed through the user interface menu, the control unit may control the content processing unit to display the content corresponding to the changed setup option.

If the preset input is performed, the control unit may determine whether setup options corresponding to the content processed by the content processing unit are provided, and if it is determined that setup options are provided, it may control the display of the user interface menu associated with the provided option.

If it is determined that the setup option corresponding to the content processed by the content processing unit is not provided, the control unit may control the display of an error message.

The display apparatus may include a content receiving unit receiving the content and the setup option information from the outside, wherein the control unit may control to display of the user interface menu based on the setup option information received by the content receiving unit.

The content receiving unit is capable of receiving a broadcasting stream from the outside, and the control unit is capable of extracting the content and the setup option information from the received broadcasting stream.

The display apparatus may include a content receiving unit receiving the content and the setup option information from the outside, wherein the control unit may control the content processing unit to display the setup option information received by the content receiving unit as overlaid over the content.

If the preset input is performed while the setup option information received by the content receiving unit is displayed as overlaid over the content for a preset period of time, the control unit controls the display of the user interface menu.

### BRIEF DESCRIPTION OF THE DRAWINGS

The above and/or other aspects of the present invention will be more apparent by describing in detail exemplary embodiments thereofwith reference to the attached drawings in which:
FIG. 1 is a block diagram showing a configuration of a display apparatus according to a first exemplary embodiment of the present invention;
FIG. 2 illustrates a user interface menu associated with a content displayed on the display apparatus of FIG. 1;
FIG. 3 illustrates a user interface menu associated with a content which is different from the content of FIG. 2;
FIG. 4 illustrates a change of a setup state of a setup option in the user interface menu of FIG. 2;
FIG. 5 is a view illustrating a change of a setup state of a setup option in a user interface menu according to an exemplary embodiment which is different from the change of the setup state of the setup option in the user interface menu of FIG. 4;
FIG. 6 is a control flow chart of a control method of the display apparatus of FIG. 1 according to a first exemplary embodiment of the present invention;
FIG. 7 is a control flow chart of a control method of a display apparatus according to a second exemplary embodiment of the present invention; and
FIG. 8 illustrates displaying of setup option information overlaid over the content in the display apparatus according to the second exemplary embodiment of the present invention.

### DETAILED DESCRIPTION OF THE EXEMPLARY EMBODIMENTS

Hereinafter, exemplary embodiments will be described in greater detail with reference tothe accompanying drawings in which the same reference numerals are used for the same elements when they are depicted in different drawings. The embodiments described below are provided in order to assist in a comprehensive understanding of the invention.

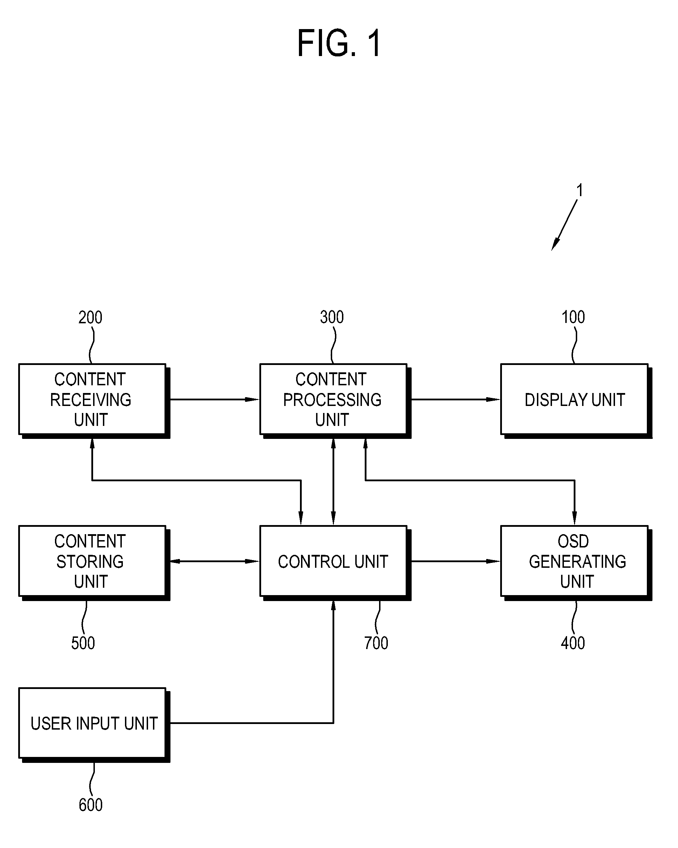

FIG. 1 is a block diagram showing a configuration of a display apparatus 1 according to a first exemplary embodiment of the present invention. According to this exemplary embodiment, the display apparatus 1 is implemented as a TV, but no limitation is applied thereto. For example, the display apparatus 1 may be implemented as a monitor (not shown) receiving contents provided from a computer main body (not shown).

As shown in FIG. 1, the display apparatus 1 according this exemplary embodiment includes a display unit 100 on which contents are displayed as images, a content processing unit 100, and a control unit 700. The content processing unit 300 processes the contents and displays them on the display unit 100. The control unit 700 determines whether a preset input is performed and whether setup options associated with the content are provided, and controls a user interface menu associated with the provided setup options to be displayed.

As setup options that can be set up in the user interface menu differ based on the content, the user changes the setup options provided to each content, thereby allowing the content to be displayed in accordance with the changed setup option.

The display apparatus 1 may further comprise a content receiving unit 200 which receives contents from the outside, an on screen display (OSD) generating unit 400 which generates predetermined information as an OSD window under the control of the control unit 700, a content storing unit 500 which stores the contents therein and a user input unit 600 which is manipulated by a user to perform a preset input.

Respective elements of the display apparatus 1 will be described below in detail.

The display unit 100 displays a content processed by the content processing unit 300 as an image thereon. Methods of displaying the image may vary depending onthe implementation of the display unit 100. For example, the display unit 100 may be implemented by a cathode ray tube (CRT) displaying an analog image, a liquid crystal display (LCD) displaying a digital image, a plasma display, a light-emitting diode (LED) display, an organic light-emitting diode (OLED) display, a surface-conduction electron-emitter display, a carbon nano-tube display, or a nano-crystal display.

The content receiving unit 200 receives a content from an external source, provided to the display apparatus 1. The content receiving unit 200 may be configured in various ways. For example, the content receiving unit 200 may receive a broadcasting stream transmitted from a broadcasting station (not shown) by wire or wirelessly, or any content provided locally from a set-top box (not shown) or a DVD/Blu-ray player (not shown). For reception of the broadcasting stream, the content receiving unit 200 may have specifications such as composite video, component video, super video, radio and television receiver manufacturers' association (SCART) or high definition multimedia interface (HDMI), etc.

The content receiving unit 200 may be connected to a server (not shown) through a network and download a content from the server (not shown). The content receiving unit 200 may also have a connector connected to an external memory (not shown) adopting wire/wireless universal serial bus (USB) or Bluetooth specifications, and may receive the content stored in the external memory (not shown).

The content receiving unit 200 may receive the content together with setup option information associated with the content. For example, where the content receiving unit 200 receives a broadcasting stream transmitted from a broadcasting station (not shown), the broadcasting stream contains a content and setup option information corresponding to the content in different frequency zones. That is, the broadcasting station (not shown) generates and transmits the broadcasting stream to contain the content and the setup option information therein.
The content receiving unit 200 may include a tuner and a de-multiplexersuch that the content receiving unit 200 can tune the received broadcasting stream by a channel and then extract the content and the setup option information from the tuned broadcasting stream.

The content processing unit 300 receives the content from the content receiving unit 200 and processes the content thereby displaying it on the display unit as an image. The content processing unit 300 may be configured in a variety of ways in order to process the contents. For example, the content processing unit 300 may include image processing blocks such as a decoder, a scaler, an image quality enhancer, a scanner, etc. With this configuration, the content processing unit 300 decodes the content into a predetermined format, adjusts it adaptively to a resolution and a size that the display unit 100 can display. If necessary, the content processing unit 300 compensates the image quality and sends it to the display unit 100to display the image on the display unit 100.
If information other than the content is transmitted, the content processing unit 300 processes the other information to be displayed on the display unit 100 together with the content. For example, if an OSD window generated by the OSD generating unit 400 is transmitted to the display unit 100, the OSD window is displayed along with the content. In this case, the content processing unit 300 may dispose the OSD window in the front of the content so that the user can view the OSD window.

In addition, the content processing unit 300 may process audio of the content so as to output it through a speaker (not shown). The content processing unit 300 may have separate configurations to process an image and audio.

The control unit 700 controls the OSD generating unit 400 to generate an OSD window containing setup option information and transmits it to the content processing unit 300. The transmitted OSD window is processed by the content processing unit 300 and then displayed on the display unit 100.

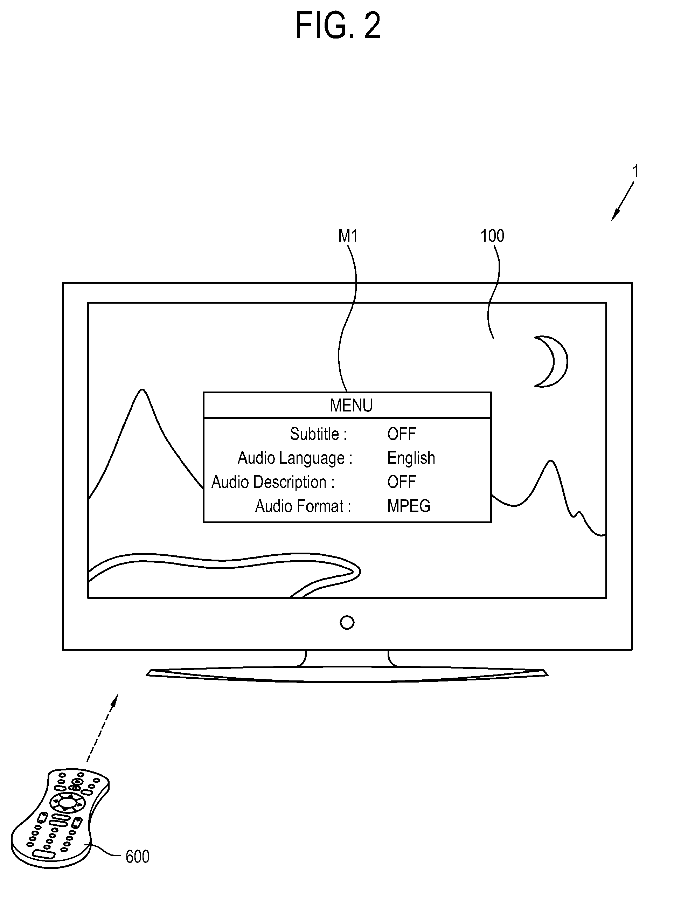

According to this exemplary embodiment, if setup option information associated with a content is transmitted from the content receiving unit 200, the OSD generating unit 200 generates a user interface menu as an OSD window based on the received setup option information and transmits it to the content processing unit 300. This process will be described later in detail with reference to FIG. 2.

The content storing unit 500 may prestore a content and its corresponding setup option information. To maintain the prestored data even in case of a power failure, the content storing unit 500 may be implemented as a non-volitile memory such as, for example, a flash memory, a hard disc drive, or a solid state drive.
The content storing unit 500 stores the content received by the content receiving unit 200 and provides it to to the content processing unit 300 according to a selection by the control unit 700. That is, the content processed by the content processing unit 300 may be provided selectively by the content receiving unit 200 or the content storing unit 500.

The user input unit 600 detects a prestored input by a user, and transmits a command corresponding to the input to the control unit 700. Then, the control unit 700 performs a control operation corresponding to the transmitted command. The user input unit 600 may be implemented by a menu key mounted on an outer surface of the display apparatus or by a remote controller.

In addtion, the user input unit 600 may be implemented in a variety of ways. For example, the display unit 100 may be implemented by a touch screen on which the user can touch a menu displayed on the display unit.

The user input unit 600 performs an input preset by the user to display a user interface associated with the content displayed on the display unit 100. No limitation is applied to a configuration of the user input unit 600. For example, the user input unit 600 may include a separate key to display the user interface menu.

If a content and its corresponding setup option information are received from the content receiving unit 200, the control unit 700 controls the content processing unit 300 to process the content and stores the setup option information in a separate buffer (not shown). If a preset input is performed through the user input unit 600 when the content is processed by the content processing unit 300 and is displayed on the display unit 100, the control unit 700 transmits the setup option information to the OSD generating unit 400.

If a user interface menu is generated by the OSD menu, based on the setup option information, the control unit 700 controls the content processing unit 300 to process the generated user interface menu so as to be displayed on the display unit 100.

If a state of a predetermined setup option is changed through the displayed user interface menu, the control unit 700 controls the content processing unit 300 to display the content based on the changed state of the setup option.

Where no input is performed for a preset period of time through the user input unit 600 after the user interface menu 600 is displayed, the control unit 700 controls the user interface menu not to be displayed. Alternatively, the control unit 700 may control the user interface menu not to be displayed even while a specific input is being performed by the user input unit 600. Various configurations with respect to this feature may be designated.

Where only a content but no corresponding setup option information is received through the content receiving unit 200, only the content is extracted from the broadcasting stream received by the content receiving unit 200. In this case, when a preset input is performed through the user input unit 600, the control unit 700 may causean error message to be displayed in lieu of the user interface menu.

Views of a user interface menu associated with a content and a change of a state of a setup option through the user interface menu will be described below with reference to FIGS. 2 to 5.

FIG. 2 illustrates displaying of a user interface menu M1 on the display apparatus 1 of FIG. 1.

As shown in FIG. 2, if a preset input is performed through a user input unit 600, the control unit 700 controls display of the user interface menu M1 in form of an OSD menu, based on the corresponding setup option information of the content being currently processed by the content processing unit 300 and displayed on the display unit 100.

The setup option information initially received by the content receiving unit 200 may include various option items associated with the concerned content. For example, the setup option of the content may include items such as subtitle, multi-audio language, audio description, audio format, etc. These items are only examples and do not limit the inventive concept of the present invention, and various items may be designated, replaced or added. Each setup option may also be different by content.
Each setup option has a default value with respect to each state. When each content is first processed, the content processing unit 300 processes the content based on the default state. If a preset input is performed through the user input unit 600, the control unit 700 displays the setup options and a default state of each option on the user interface menu M1.

The user interface menu M1 of FIG. 2 shows four setup options associated with a content currently displayed on the display unit 100 and their corresponding states. The default state of each option associated with the content is as follows: subtitle is set to OFF, audio language is set to English, audio description is set to OFF and audio format is set to MPEG.

The audio description is an audio service for blind persons rather than for ordinary users.

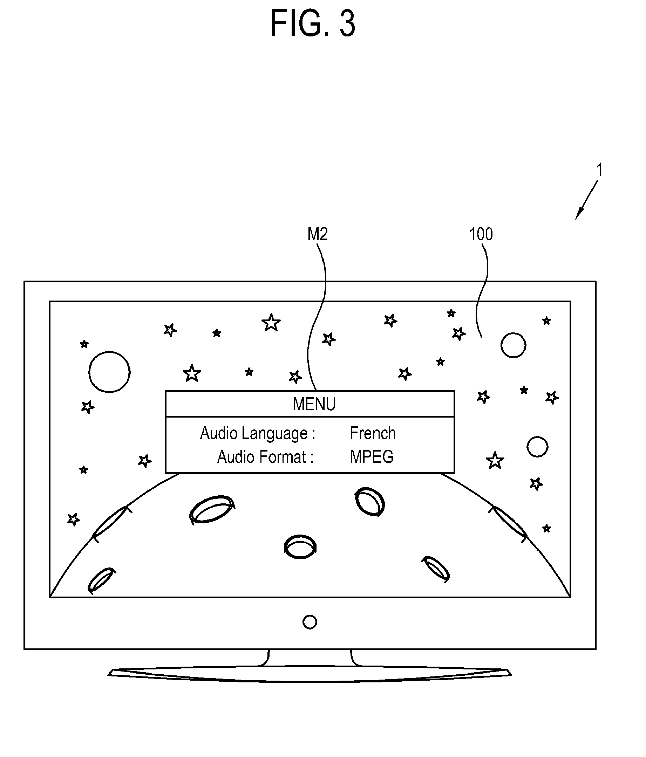

If the content is changed to another content at the state of FIG. 2, the setup option information corresponding to the concerned content is also changed. This situation will now be described with reference to FIG. 3.

FIG. 3 illustrates displaying of a user interface menu while a content different from the content of FIG. 2 is displayed.

As shown in FIG. 3, if the content of FIG. 2 is changed into another content, the control unit 700 displays the changed content on the display unit 100, and obtains setup option information associated with the concerned content.

If a preset input is performed by the user input unit 600, the control unit 700 controls display of a user interface menu M2 on the display unit 100 based on the obtained setup option information. The user interface menu M2 of FIG. 3 indicates that with respect to the concerned content, an audio language is set to French and an audio format is set to MPEG.

Comparing FIGS. 2 and 3, it is apparant that the setup option associated with each content and the setup states by option are different. In other words, the items displayed in the user interface menus M1 and M2 are different.

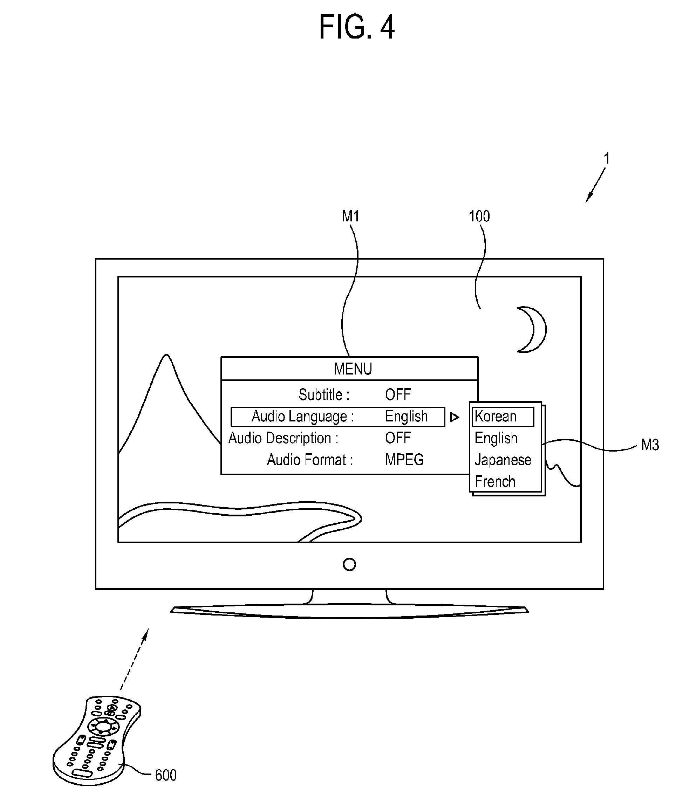

FIG. 4 illustrates a change of a setup state of a predetermined option through the user interface menu M1 displayed in FIG. 2.

As shown in FIG. 4, when the user interface menu M1 is displayed, the user can change a setup state of a desired option selected from the options displayed in the menu M1.

For example, to change an audio language from English to Korean, the user selects an audio language option through the user input unit 600. The control unit 700 controls the OSD generating unit 400 and the content processing unit 300 to generate a separate state selection menu M3 with respect to the setup state of the audio language and displays the state selection menu M3.

If the user selects Korean in the state selection menu M3 through the user input unit 600, the control unit 700 controls the content processing unit to change the audio language of the content to Korean responsive to the selection.

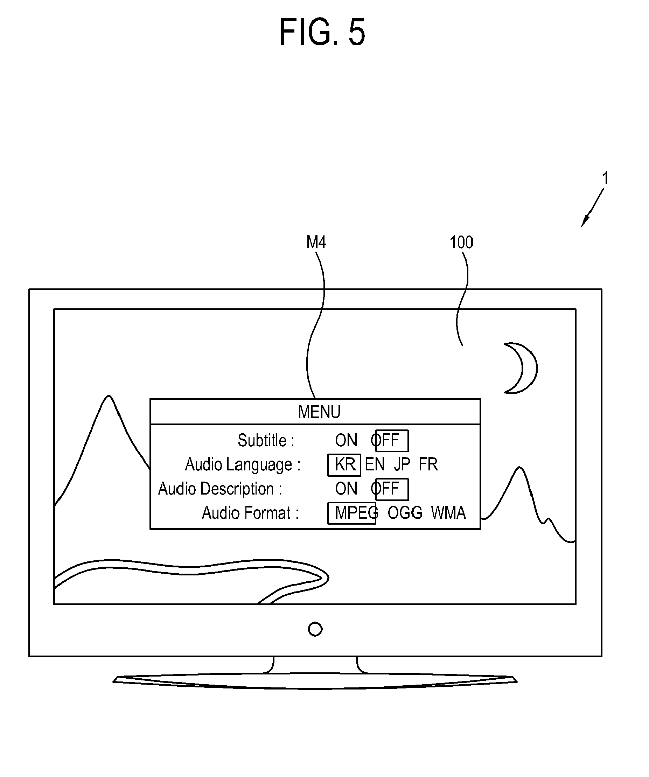

FIG. 4 shows that a state selection menu M3 is displayed separately from the user interface menu M1. However, there is no limitation in the present invention with respect to this feature. It is possible, for example, to configure a menu which is from the menu depicted in FIG. 4. An example of a different menu will be described with reference to FIG. 5.

FIG. 5 illustrates a user interface menu M4 different from that of FIG. 4.

As shown in FIG. 5, the user interface menu M4 displays each option item together with a plurality of setup states corresponding thereto. If any of the setup states corresponding to any ofthe option item is selected, the user can move a cursor onto each setup state to select it through the user input unit 600.

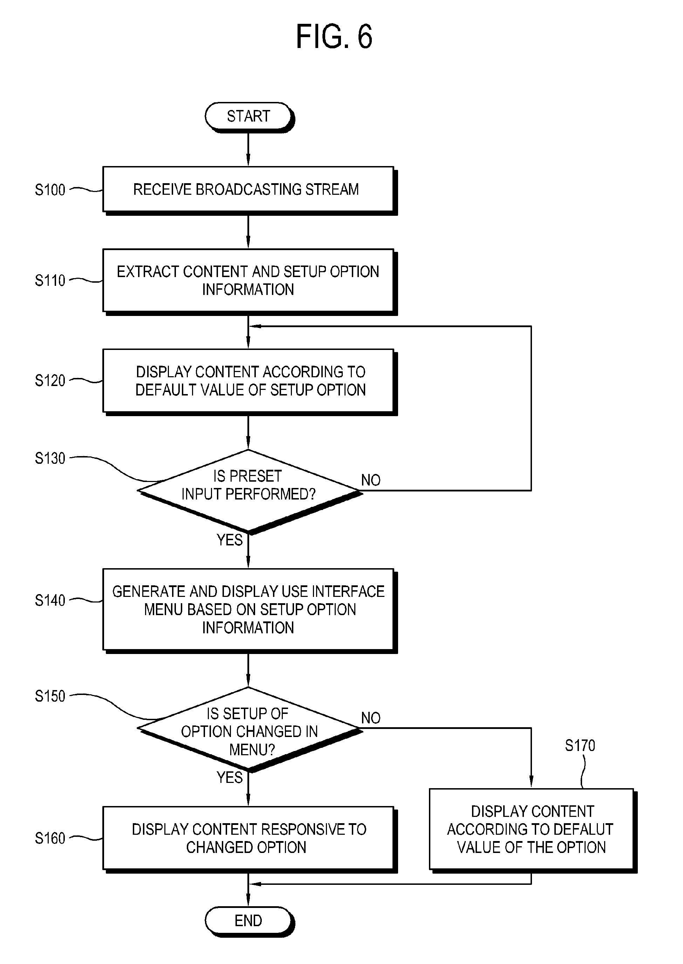

A control method of the display apparatus 1 according to the first exemplary embodiment will be described with reference to FIG. 6. FIG. 6 is a control flow chart of a control method according to the first exemplary embodiment.

As shown in FIG. 6, the content receiving unit 200 receives a broadcasting stream from the outside (S100) and extracts a content and its corresponding setup option information from the received broadcasting stream (S110).

The content processing unit 300 receives the content and the setup option information from the content receiving unit 200, processes the content based on default state values of the setup option, and displays the processed content on the display unit 100 (S120).
The user performs the preset input with respect to the displayed content through the user input unit 600, and the control unit 700 determines whether the input has been performed (S130).

If it is determined that the preset input has been performed, the control unit 700 generates and displays a user interface menu based on the setup option information extracted from the content receiving unit 200 (S140).
The control unit 700 determines whether a setup state with respect to at least one setup option is changed through the user interface menu (S150).

If it is determined that the at least one setup option has been changed, the control unit 700 displays a content corresponding to the setup state of the changed setup option (S160). However, if it is determined that no setup option has been changed, the control unit 700 displays the content according to a default state value of the option (S170).

According to this exemplary embodiment, it is possible to receive a content and its corresponding setup option information and provide a user interface menu through which a setup state can be changed based on the received setup option information.

In addition, the user interface menu is displayed with a different setup option when the content is changed and a setup state thereof according to the changed content, and where the content is changed, the user can easily change the setup state of the changed content.

The present exemplary embodiment has been described with respect to a case where a preset input is performed through the user input unit 600. However, the present invention is not limited with respect to this feature.
According to a second exemplary embodiment of the present invention, if displaying of a content starts, the control unit 700 overlays the setup option information corresponding to the content over the content for a preset period of time. The user ascertains the the setup option information displayed as overlaid and selects a user interface menu to be displayed.

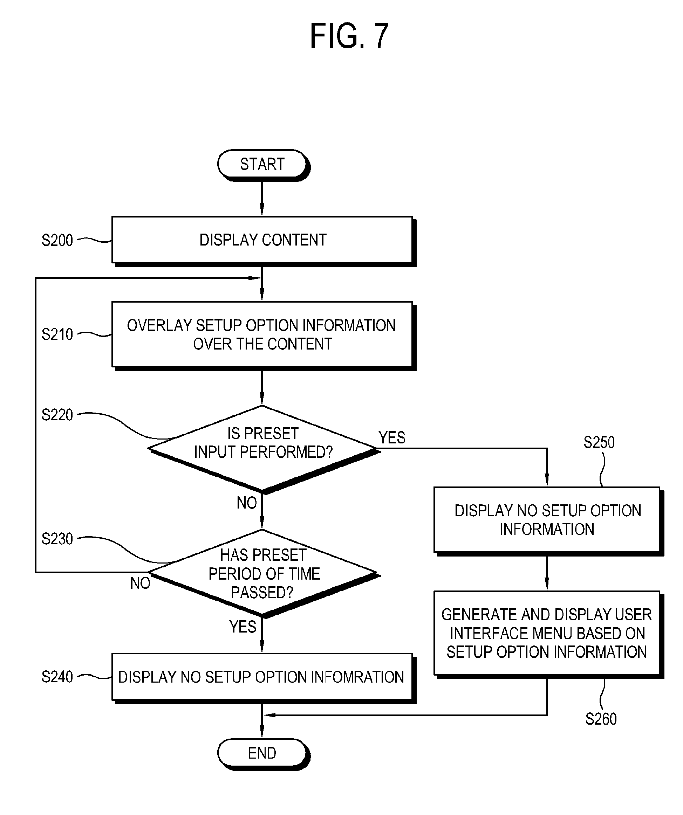

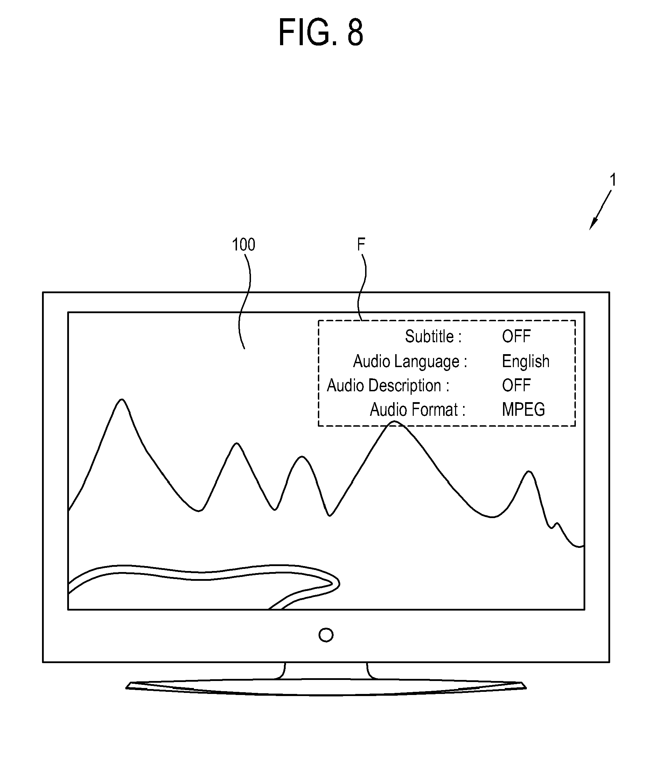

This exemplary embodiment will be described with reference to FIGS. 7 and 8. FIG. 7 is a control flow chart of a control method of a display apparatus according to the second exemplary embodiment of the present invention, and FIG. 8 illustrates displaying of setup option information overlaid over the content in the display apparatus according to the second exemplary embodiment of the present invention.

As shown in FIG. 7, if a content and its corresponding setup option information are received by the content receiving unit 200, displaying of the content processed by the content processing unit 300 starts (S200).

The control unit 700 controls the control processing unit 300 to overlay the setup option information over the content (S210) (see FIG. 8). Here, the control unit 700 may control each option item to be displayed together with a current setup state of the respective setup option.

The control unit 700 determines whether a preset input is performed through the user input unit 600 (S220).

If it is determined that the present input has not been performed, the control unit 700 determines whether a preset period of time has elapsed (S230). If it is determined that the preset period of time has elapsed, the control unit 700 controls the overlaid setup option information F not to be displayed (S240).

If it is determined that the present input has been performed at operation (S220), the control unit 700 controls the overlaid setup option information F not to be displayed (S250), and instead the user interface menu to be generated and displayed based on the setup option information (S260).

It is possible to change the setup state of each option through the user interface menu in the same manner as described above with respect to the first exemplary embodiment of the present invention. Accordingly, description thereof will be omitted herein.

According to the second exemplary embodiment, when a content is displayed, the user can select whether to display a user interface menu while setup option information of the content and the default setup state of each option item is displayed for a preset period of time. Although a few exemplary embodiments of the present invention have been illustrated and described in detail, the present invention shall not be limited thereto, and can be carried out in various ways, within the scope of the claims as claimed in the specification. Further, it will be appreciated by those skilled in the art that changes may be made in these exemplary embodiments without departing from the principles and spirit of the invention, the scope of which is defined in the appended claims and their equivalents.

## Claims

1. A control method of a display apparatus, the method comprising:
displaying content; and
if an input is received, displaying a user interface menu associated with at least one setup option corresponding to the displayed content.

2. The method of claim 1, further comprising, if the at least one setup option is changed through the user interface menu, displaying the content in accordance with the changed at least one setup option.

3. The method of claim 1, wherein the displaying the user interface menu comprises:
if the input is received, determining whether the at least one setup option corresponding to the displayed content is provided; and
if it is determined that the at least one setup option is provided, displaying the user interface menu associated with the provided at least one setup option.

4. The method of claim 3, wherein the displaying the user interface menu further comprises, if it is determined that the at least one setup option is not provided, displaying an error message.

5. The method of claim 1, wherein the displaying the content comprises receiving the content and setup option information from an external source, and
wherein the displaying the user interface menu comprises generating the user interface menu based on the received setup option information.

6. The method of claim 5, wherein the receiving the content and the setup option information comprises:
receiving a broadcasting stream from the external source; and
extracting the content and the setup option information from the received broadcasting stream.

7. The method of claim 1, wherein the displaying the content comprises receiving the content and setup option information from an external source, and
wherein the displaying the user interface menu comprises overlaying the received setup option information over the content for a preset period of time.

8. The method of claim 7, wherein the overlaying the received setup option information comprises, if the input is received while the setup option information is being overlaid over the content, displaying the user interface menu instead of the overlaid setup option information.

9. A display apparatus comprising:
a display unit;
a content processing unit which processes content so as to display the content on the display unit; and
a control unit which controls display of a user interface menu associated with at least one setup option corresponding to the content processed by the content processing unit if an input is received.

10. The display apparatus of claim 9, wherein if the at least one setup option is changed through the user interface menu, the control unit controls the content processing unit to display the content corresponding to the changed at least one setup option.

11. The display apparatus of claim 9, wherein if the preset input is performed, the control unit determines whether the at least one setup option corresponding to the content processed by the content processing unit is provided, and if it is determined that the at least one setup option is provided, the control unit controls the display of the user interface menu associated with the provided at least one setup option.

12. The display apparatus of claim 9, further comprising a content receiving unit which receives the content and setup option information from the outside,
wherein the control unit controls the display of the user interface menu based on the setup option information received by the content receiving unit.

13. The display apparatus of claim 12, wherein the content receiving unit receives a broadcasting stream from an external source, and
wherein the control unit extracts the content and the setup option information from the received broadcasting stream.

14. The display apparatus of claim 9, further comprising a content receiving unit which receives the content and setup option information from an external source,
wherein the control unit controls the content processing unit to display the setup option information received by the content receiving unit as overlaid over the content.

15. The display apparatus of claim 14, wherein if the input is received while the setup option information received by the content receiving unit is displayed as overlaid over the content for a preset period of time, the control unit controls the display of the user interface menu, instead of the overlaid setup option information.
